# EUROPEAN PATENT SPECIFICATION

(11) **EP 3 408 199 B1**
(45) Date of publication and mention of the grant of the patent: **23.11.2022**
(21) Application number: 17711004.6
(22) Date of filing: 26.01.2017
(51) Int. Cl.: B65G 51/01

(54) **APPARATUS FOR PROCESSING HORTICULTURAL PRODUCTS**
VORRICHTUNG ZUR VERARBEITUNG VON GARTENBAUPRODUKTEN
APPAREIL DE TRAITEMENT DE PRODUITS HORTICOLES

(30) Priority: 28.01.2016 IT UB20160487
(43) Date of publication of application: 05.12.2018
(73) Proprietor: Unitec S.p.A., 48022 Lugo (IT)
(72) Inventor: AMADORI, Manuel, 48018 Faenza (IT); FANTONI, Maria Elena, 40134 Bologna (IT); FURIERI, Luca, 52100 Arezzo (IT); MARIAN, Marco, 48100 Ravenna (IT); PAPADHIMITRI, Xhoan, 48010 Gambellara (IT); ZUCCHELLI, Andrea, 40014 Crevalcore (IT)
(74) Representative: Modiano, Micaela Nadia
(86) International application number: PCT/IB2017/050405
(87) International publication number: WO 2017/130125

(56) References cited:
- JP-A- 2001 354 318
- US-A- 2 165 397
- US-A- 4 050 371

## Description

The present invention relates to a line for processing horticultural products.

The industrial sectors that use automation intensively in order to optimize and standardize various work activities, allowing mass productions at modest costs, are currently increasingly numerous.

This situation is certainly shared by companies that operate in the food industry, which in fact has the need to meet a constantly growing demand without renouncing high quality standards.

In greater detail, companies that deal with packaging and distributing on a large scale horticultural products (and fruit in particular) equip themselves with lines and systems that are assigned to the processing of the horticultural products in various manners and for different purposes.

According to constructive solutions which are by now well established, these lines often have channels in which a current of water is made to flow, with the task of propelling the horticultural products to be processed while they flow on the free surface of said current, which is thus responsible for their downstream entrainment.

It should be noted that usually lines of the type described above are fed with an indiscriminate mass of products (often arriving directly from the picking fields), which therefore have variable parameters in terms of color, size, defects, etc.

While the horticultural products are propelled by the current, they can therefore be subjected to various processes (cleaning, selection, grading, checking, etc.), so as to arrive at respective terminal areas effectively sorted into uniform subgroups, which are designed to be subsequently processed in a distinct manner.

However, these constructive solutions are not free from drawbacks.

At said terminal areas, there is often the need to transfer the horticultural products, which still float in the fluid current, into containers of another type (for example simple metallic crates having a box-like shape), in which said products are then subsequently transported and/or distributed (or subjected to further processes).

However, transfer from the terminal areas of the channels to the containers is very complicated, posing problems that are not easy to solve for the companies that deal with the design of the lines.

The transfer of horticultural products floating freely along the free surface of a mass of water, and for which it is therefore evidently not possible to determine precisely the position, in fact prevents controlled transfer of the products, since indeed the path that any automated pickup and transfer units would have to follow is not programmable with certainty.

Therefore, designers are forced to resort to complex devices, which indiscriminately transfer large quantities of products, picking them up simultaneously from the water, not without high costs, considerable structural complications and high risk of damage of said products.

These difficulties are observed for example in apple processing lines, when indeed one wishes to deposit uniform subgroups thereof in the terminal collection containers.

The document US 4,050,371 discloses a line for processing horticultural products according to the preamble of claim 1.

In any case, even lines and systems designed for the processing of other horticultural products are not free from these problems, both at similar steps of the process for the transformation and processing of said products and in others, wherein in any case their random distribution on the free surface of the fluid current that previously transported them turns out to be an unwelcome hindrance for subsequent activities.

The aim of the present invention is to solve the problems described above, by providing a processing line that allows practical sorting of horticultural products floating on a fluid current.

Within this aim, an object of the invention is to provide a processing line that allows to align one by one, on one or more rows, horticultural products floating on a fluid current.

Another object of the invention is to provide a processing line that offers practical methods for solving any incorrect arrangements of one or more horticultural products.

Another object of the invention is to provide a processing line that can allow a practical transfer of the horticultural products after their sorting.

Another object of the invention is to provide a processing line that ensures high reliability in operation and can be obtained easily starting from commonly commercially available elements and materials.

Another object of the invention is to provide a processing line that has modest costs and is safe in application.

Another object of the invention is to propose a processing line that adopts a technical and structural architecture that is alternative to those of any apparatuses of the known type.

This aim and these and other objects that will become better apparent hereinafter are achieved by a line for processing horticultural products, according to claim 1.

Further characteristics and advantages of the invention will become better apparent from the description of a preferred but not exclusive embodiment of the processing line according to the invention, illustrated by way of nonlimiting example in the accompanying drawings, wherein:
Figure 1 is a perspective view of the apparatus of the processing line according to the invention and of a possible mode of use thereof for the sorting and subsequent transfer of horticultural products;

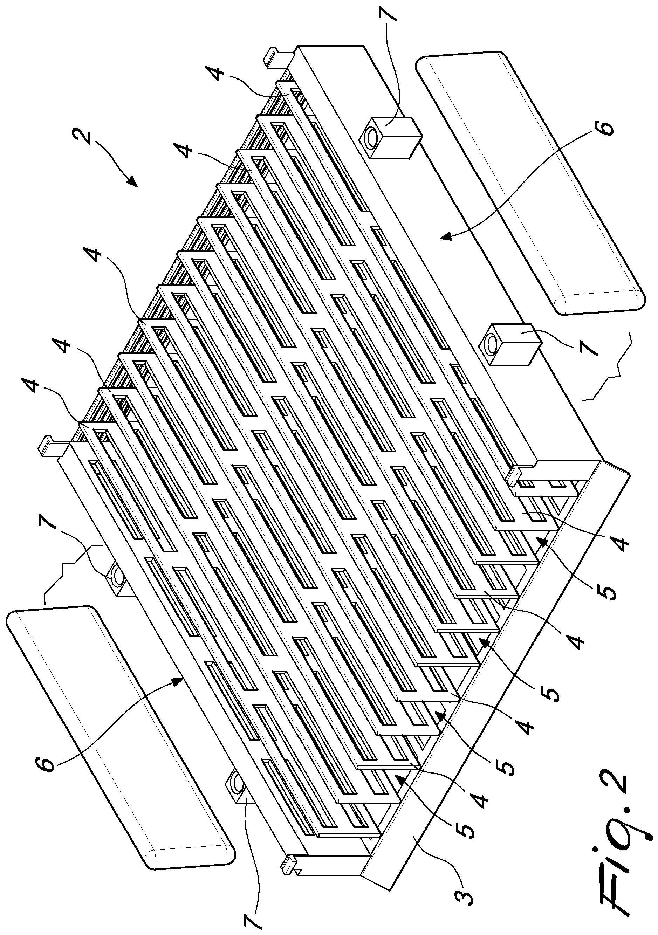

Figure 2 is a partially exploded perspective view of a matrix of the apparatus of Figure 1;

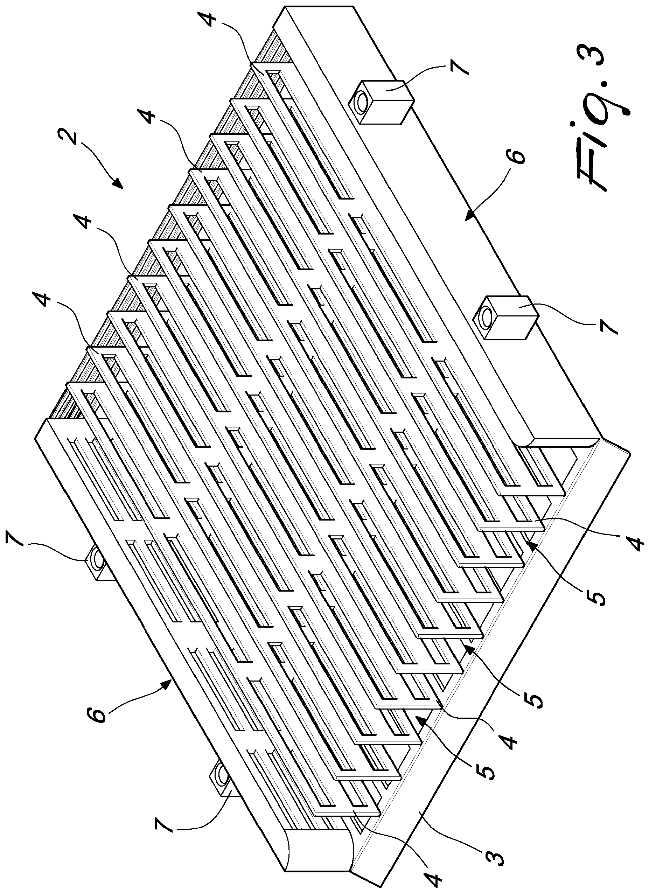

Figure 3 is a perspective view of the matrix of Figure 2;
Figure 4 is a perspective view of the matrix of Figure 2, with some horticultural products aligned, and of an additional component of the apparatus;
Figures 5 and 6 are perspective views of the additional component of Figure 4 in different operating conditions;
Figures 7 and 8 are front elevation views of the component of Figure 4, respectively in the active conditions of Figures 5 and 6.

With reference to the figures, the reference numeral 1 generally designates an apparatus for processing horticultural products A, which are propelled along a tank B of a respective processing line by a fluid current (typically water, appropriately moved), on which the horticultural products A can float freely.

According to substantially known methods, along the line the horticultural products A are subjected to various treatments (checking, grading, selection, cleaning, etc.) at respective stations, which the fluid current skims in its motion (and so do the products A with it).

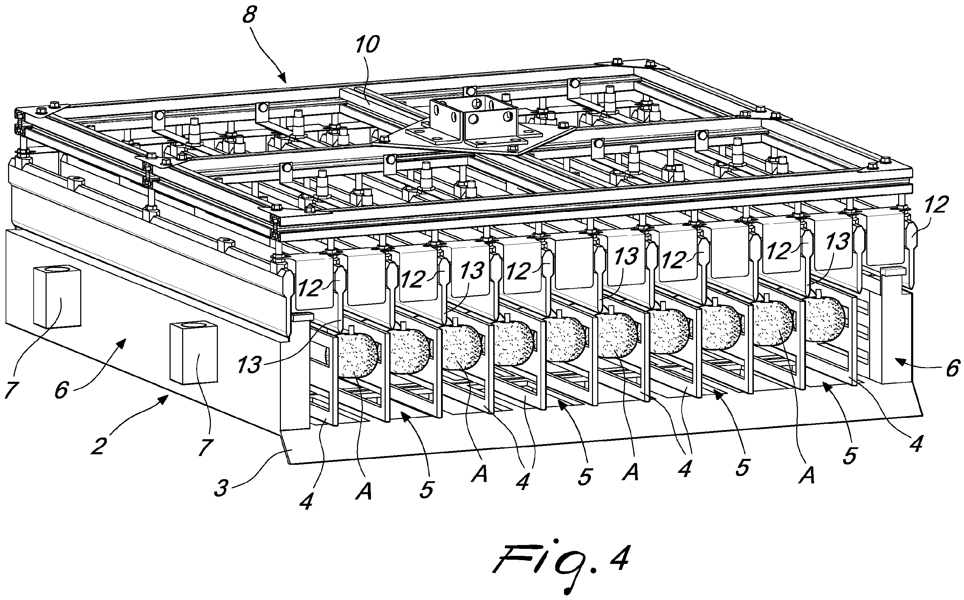

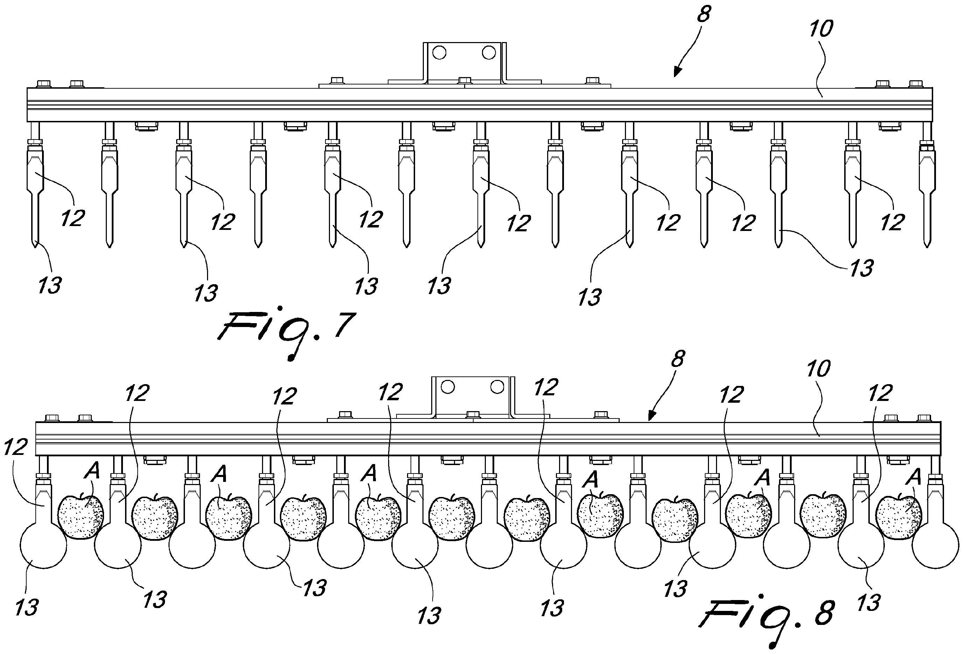

It is useful to note that in the preferred application the horticultural products A are apples (as also in the accompanying Figures 4 and 8): in this context, usually the line is fed with an indiscriminate mass of apples, which have heterogeneous parameters in terms of color, size, defects, etc. The line has the task of performing a series of checks and verifications on this mass, sorting the apples into uniform subgroups (according to one or more preset parameters), which are designed to be subsequently processed distinctly.

Therefore, when they arrive at the apparatus 1, the apples are divided into uniform subgroups and must be extracted from the water in order to be stored in adapted containers (for example ordinary metallic crates, which have a box-like shape and are open upward), in order to thus render them available to the warehouse, to the subsequent logistical distribution network or to further processes.

In order to be able to perform the transfer effectively (for example in manners that will become better apparent hereinafter in the continuation of the present description), the need is felt to sort the apples, which otherwise float randomly with a random distribution on the free surface of the water.

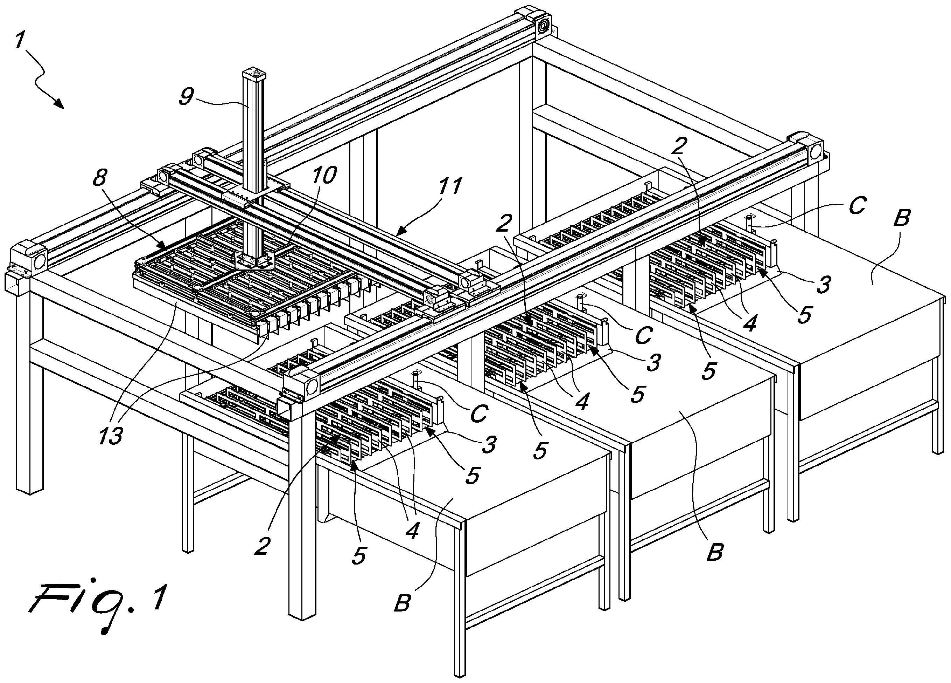

The solution of the accompanying figures therefore shows a possible application of the apparatus 1 in which the line has in parallel a plurality of tanks B (for example three, as in Figure 1), each of which is affected by a flow of homogeneous apples (indeed by virtue of the activities directly upstream along the line), so that each container can be filled exclusively with apples of the same color or of the same size, etc.

As will become apparent, the apparatus 1 is therefore capable of ensuring the sorting of apples, allowing practical pickup thereof.

It is also useful to note that the context described above has been outlined merely by way of nonlimiting example of the the scope of protection, which is defined by the appended claims ; as a function of the specific requirements, this protective scope (as well as any reference to apples in the paragraphs that follow) is in fact to be understood as extended to any other type of horticultural product A.

Likewise, the protection claimed herein is extended to the use of the apparatus 1 even at different portions of lines or automated systems and/or in different moments of the process for the transformation or processing of said products A, wherein in any case the need is felt to sort in a uniform manner apples or other horticultural products A, which otherwise float randomly.

According to the invention, the apparatus 1 comprises at least one floating alignment matrix 2, which is provided with a base platform 3; the platform 3 can be arranged, submerged, at a predefined section of the tank B, where indeed one wishes to align the apples. Usually, but not exclusively, said predefined section corresponds to a terminal portion of the tank B.

Furthermore, the matrix 2 comprises a plurality of mutually parallel partitions 4, which extend at right angles from the upper face of the platform 3 and which, when the platform 3 is submerged in the predefined section, at least rise above the free surface of the predefined section of the tank B.

The partitions 4 can therefore be arranged along the direction of motion of the fluid current and define a respective channel 5 for automatic forced alignment for the horticultural products A, which are propelled toward the predefined section by the fluid current.

The partitions 4 allow to achieve in a practical and effective manner the preset aim: when the products A reach the predefined section of the tank B, they are forced to enter and distribute themselves within the channels 5, which are indeed formed by the emerging partitions 4, thus achieving the desired sorting of the horticultural products A, making them available to the subsequent stations and/or devices, in a manner which is no longer chaotic.

In particular, each pair of adjacent partitions 4 has the same center distance, which is chosen so as to substantially correspond to the transverse space occupation of the horticultural products A that float on the free surface of the fluid current (and therefore, for example, a few centimeters greater than the grade of the apples).

This allows to obtain the alignment of the apples one by one along each channel 5.

In order to give the greatest versatility to the apparatus 1, the center distance between each pair of adjacent partitions 4 (be it preferably always the same for all the channels 5 or not) is adjustable at will: in this manner it is in fact possible to adapt simply and rapidly to any variations of the transverse space occupation of the horticultural products A that float on the free surface of the fluid current.

The same apparatus 1 can thus be used effectively both when one wishes to sort apples that have a different grade and to treat different horticultural products A.

Usefully, the apparatus 1 comprises means for adjusting the density of the matrix 2, in order to be able to obtain first of all its floating at a first vertical height, during the normal alignment of the horticultural products A.

By virtue of the adjustment means, the matrix 2 can subsequently move to a second vertical height (and obviously vice versa), which is greater than the first vertical height (reducing the density of the matrix 2), thus achieving the partial lifting of the partitions 4.

This possibility is of unquestionable practical interest: it should in fact be noted that during alignment sometimes one or more apples might not arrange itself correctly along one of the channels 5, remaining for example at the margin of the matrix 2.

By lifting the partitions 4 (when the filling of the channels 5 is substantially completed), one obtains automatically the settling of the horticultural products A within the channels 5, solving any incorrect placements of one or more horticultural products A.

In fact, by means of the partial lifting the apples are forced to fall back into one of the channels 5 or, at the most, outside of the matrix 2.

Of course, after the downstream devices have taken on the task of picking up the apples, the density of the matrix 2 is changed again, in order to return it to the first vertical height.

In a first embodiment of considerable practical interest, which is mentioned by way of nonlimiting example of the application of the invention, said adjustment means comprise a pneumatic circuit, which is affected by a compressed air dispenser and leads to the matrix 2.

The dispenser can thus send on command compressed air into the matrix 2 (typically, at the platform 3), which is at least partially hollow, with a consequent increase in the internal pressure and density; furthermore, the circuit (for example directly the platform 3) is provided with at least one discharge valve, for the expulsion on command of the compressed air, with consequent reduction of the internal pressure and density.

After introducing compressed air in the platform 3, during setup, so as to place it in the tank B at the first vertical height, after filling and during each cycle it is possible to act on the discharge valve in order to cause the lifting of the matrix 2 up to the second vertical height, and then, after the evacuation of the apples, the dispenser can again send compressed air, in order to restore the first vertical height and the cycle start conditions.

In any case, it is useful to specify that the adjustment means may also be different and therefore can operate even without compressed air (but with other fluids) and can use systems other than the pneumatic circuit described above, for the controlled variation of the vertical height of the matrix 2, without abandoning the protective scope claimed herein.

Moreover, the protective scope claimed herein also includes the possibility to provide lifting from the first vertical height to the second vertical height (and vice versa) even in different manners, therefore without resorting to the adjustment means.

Advantageously, the apparatus 1 comprises elements 6 for guiding the movement of the matrix 2, within the respective tank B, between the first vertical height and the second vertical height, preventing unwanted variations of the configuration (inclinations of the platform 3) during the descending or ascending motion determined by the density variations.

In the embodiment proposed in the accompanying figures merely by way of example, each guiding element 6 comprises a lateral bar, which is arranged at a respective side of the platform 3 and is provided with at least one corresponding slider 7, which can be coupled slidingly to a corresponding track C, which is anchored to the lateral internal surfaces of the tank B, so as to indeed guide its movement between the first vertical height and the second vertical height.

As already noted in the preceding pages, in one possible practical application the apparatus 1 is designed to ensure the transfer of the apples (sorted on multiple rows) toward a collection container.

In this application, which enhances the usefulness of the matrix 2 described in the preceding pages, the apparatus 1 therefore comprises an assembly for moving a head 8 between at least one collection position, in which it substantially faces and is proximate to the matrix 2, and an unloading position, in which the head 8 faces and is proximate to a container for collecting the horticultural products A.

The movement of the head 8 can be provided in various manners, which are in any case within the protective scope claimed herein. In the embodiment proposed by way of nonlimiting example of the application of the invention, the head 8 comprises a central post 9 which supports at its base a lattice-like framework 10. In this embodiment, the movement is assigned to a Cartesian robot 11, which by virtue of a plurality of prismatic guides indeed allows to move at will the head 8 (the post 9) between each tank B and the collection container or containers.

The head 8 therefore comprises means for picking up and retaining the horticultural products A, which can be activated at the collection position, and deactivated at the unloading position.

In particular, the pickup and retention means comprise first of all a plurality of walls 12 which are normally arranged vertically, are formed by the head 8 and are spaced along the already mentioned center distance (which is preferably constant) between the pairs of adjacent partitions 4. The center distance between the walls 12 also is in any case preferably adjustable at will, like the center distance between the partitions 4.

Furthermore, the pickup and retention means comprise respective retractable transverse elements 13, which can move between at least one active configuration, which can be activated upon reaching the collection position, and at least one passive configuration, which can be activated upon reaching the unloading position.

It should be noted that in the collection position, the matrix 2 is pushed downward by the head 8 and the walls 12 are thus interposed between the horticultural products A previously aligned by the partitions 4, replacing them (since they replicate their distribution, by being spaced along according to the same center distance).

Likewise, in the unloading position the walls 12 face and are proximate to the bottom level of the collection container, and said bottom level can be constituted by the base of said container or by a layer of apples that is already deposited in the container (in a preceding operating cycle).

In order to allow to pick up and retain the apples, in the active configuration the transverse elements 13 protrude transversely from the space occupation of the walls 12, contrasting by mechanical interference the fall of the horticultural products A, as a consequence of the subsequent lifting of the head 8 and of its transfer towards the unloading position.

In practice, therefore, at each cycle the head 8 descends towards the matrix 2, which previously accepted the apples in its channels 5, filling them (and aligning said apples in rows); when it reaches the collection position, the walls 12 descend between the apples, partially submerging and in any case pushing downward the partitions 4, replacing them (the apples thus do not lose their sorting).

For this purpose, of course, the trajectory of the head 8 is chosen so that the walls 12 are vertically aligned with the partitions 4 during descent.

In practice, the head 8 can push the matrix 2 downward by means of adapted feet placed at the edges of the head 8, which make contact with respective peripheral abutments of the matrix 2.

Once this condition has been obtained, the transition to the active configuration is activated by making the transverse elements 13 protrude from the space occupation of the walls 12: the apples now interposed between the walls 12 can thus be picked up by the head 8 and retained by them and by the transverse elements 13 (which prevent their fall), vice versa allowing a practical handling thereof.

In the passive configuration, which can be activated in the unloading position (and maintained until subsequent return to the collection position), instead, the transverse elements 13 are retracted toward the walls 12, for the free release of the horticultural products A into the respective collection container.

It is thus evident how the head 8 transfers the apples: after picking them up in the loading position, it takes care of their transport to the collection container, where it deposits them simply by deactivating the elements 13 (making them "disappear"), being able to subsequently restart a new operating cycle (in the same tank B and/or in the same collection container, or in others).

It should be noted that both pickup and release occur in a nontraumatic manner for the apples, since they are raised from below, while they still float in the water in the collection position, and are deposited onto the underlying level, with a minimal fall (by choosing appropriate the height at which the descent of the head 8 in the collection container stops).

It is useful to note that the transverse elements 13 may be any according to the specific requirements of application, on condition of being able to ensure the desired lower support for the apples, without subjecting them to impacts or traumas.

For example, each transverse element 13 might be constituted by a sort of gate (made of polymeric, metallic or other material), inserted retractably in a respective wall 12 and guided by it: by means of a mechanism, each gate can exit from the wall 12, offering a lower support to the apple, providing the desired mechanical interference.

In the preferred constructive solution, instead, proposed in the accompanying figures by way of nonlimiting example of the application of the invention, each transverse element 13 is shaped by at least one active portion of at least one membrane (an air chamber for example), which can be inflated on command in order to cause its transition from the passive configuration to the active configuration.

Of course, the deflation of the membrane allows the reverse transition from the active configuration to the passive configuration.

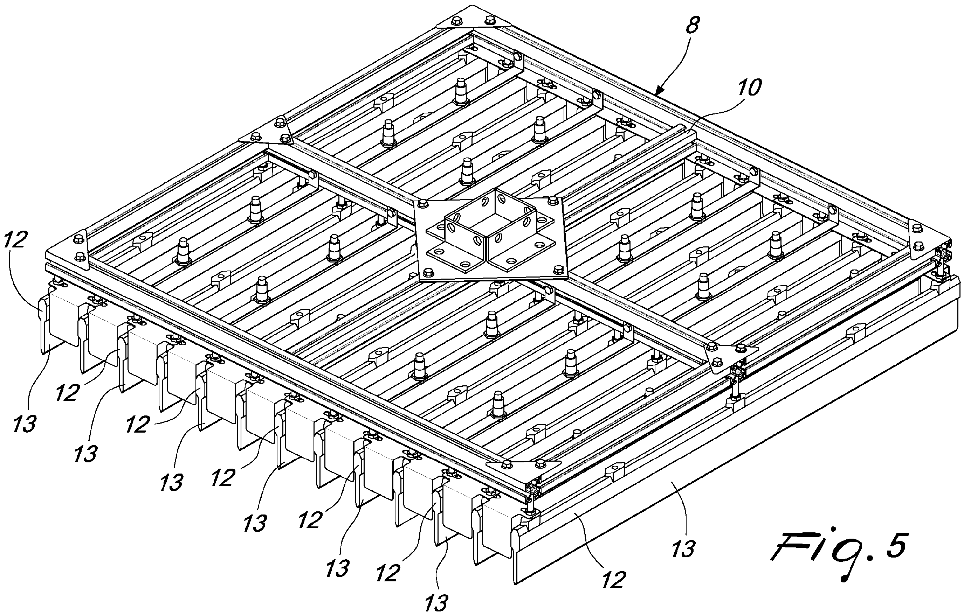

More particularly, and with additional reference to the accompanying figures, each membrane is coupled in a lower region to a respective wall 12, which has a substantially laminar configuration and can indeed be inflated on command in order to pass from the passive configuration, in which it has a substantially laminar shape and is substantially aligned, vertically, with the respective wall 12 (Figures 1, 4, 5 and 7), to the active configuration.

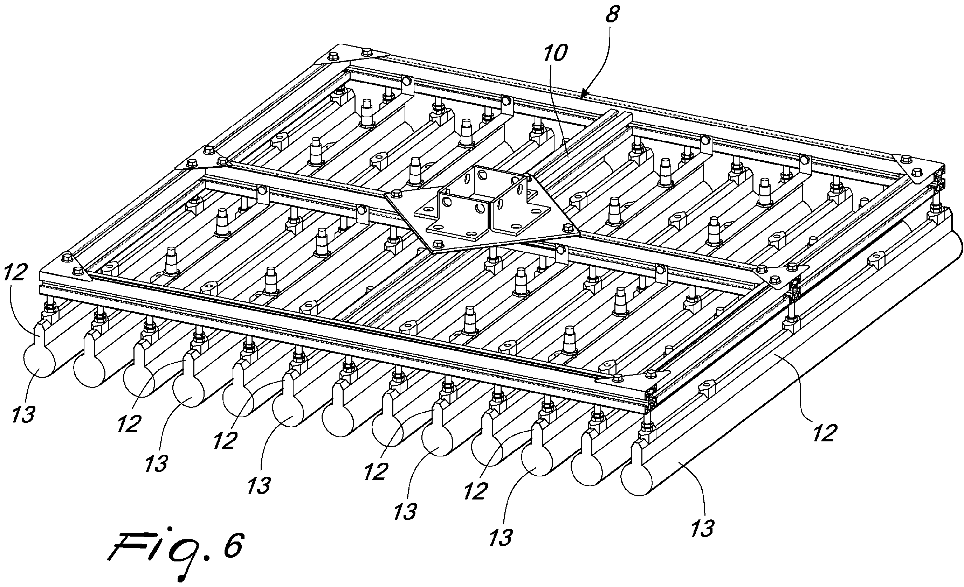

In the active configuration (Figures 6 and 8), the membrane has an increased volume and a preferably (but not exclusively) cylindrical contour.

It is specified that each membrane can be coupled directly below the respective wall 12 or can cover it at least partially, with a fixed flap thereof, while its remaining part extends freely below and can indeed inflate in order to pass from the passive configuration to the active configuration and vice versa.

As is therefore evident also from Figures 6 and 8, when the membrane is inflated, respective mutually opposite (substantially semicylindrical) active portions of each pair of adjacent membranes (of the elements 13) delimit in a lower region the seat formed by the respective walls 12 and therefore cooperate for mechanical interference in the fall of the horticultural products A.

It should be noted that the longitudinal dimension of the partitions 4, of the walls 12 and of the membranes can be chosen at will and can for example correspond to a corresponding dimension of the base of the collection container (and of the predefined section of the tank B).

In this manner, each pair of partitions 4 and of adjacent membranes is respectively responsible for the sorting and interference in the fall of a plurality of apples, aligned in the same channel 5. Likewise, the number of partitions 4 and walls 12 which are parallel can be chosen so that the corresponding transverse dimension of the head 8 corresponds to the other dimension of the base of the collection container (and to the other dimension of the predefined section of the tank B).

In this manner, at each operating cycle the apparatus 1 transfers all the apples that float indeed at the predefined section, forming a corresponding layer in the collection container.

It should be noted therefore that the apparatus 1 ensures the possibility to accumulate the apples on multiple superimposed layers in the same container. This is of absolute practical interest, since it allows to collect a large number of apples in containers that have a small transverse cross-section, at the same time maintaining compact dimensions of the predefined section.

The choice to adopt inflatable membranes (in addition to being a solution that is evidently suitable for work in water and for effective interaction with the matrix 2) falls effectively within the goal of ensuring delicate treatment and therefore respect for the quality of the apples, avoiding subjecting them to impacts. In the collection position, as shown, the membranes are in fact simply inflated below the apples, then forming a soft resting base, without performing any positive grip of the apples, avoiding impacts or traumas.

At the same time, it should be noted that when the head 8 reaches the unloading position, the membranes move substantially into contact with the bottom level of the collection container: even when said bottom level is constituted by a layer of previously deposited apples, the inflated membranes can rest on it nontraumatically without damaging the apples. Furthermore, when the membranes are moved from the active configuration to the passive configuration, deflation ensures a substantially gradual release of the apples, therefore again complying with their quality.

Indeed to ensure optimum release of the apples, the apparatus can comprise means for detecting a vertical coordinate assumed at each work cycle by the top of the horticultural products A, when they are released into the collection container at the respective unloading position. For example, said detection means can be constituted by one or more infrared proximity sensors, arranged between the walls 12, and assigned to detect the vertical height of respective apples previously deposited in the collection container.

These proximity sensors can thus be controlled by an electronic unit (a controller, a computer, etc.) provided with modules for processing the collected data, to perform first of all an average of the data acquired at each cycle, and indeed obtain an accurate estimate of the vertical coordinate that corresponds to the top of the apples of the already deposited layer, on which the descent stroke of the head 8 in the subsequent cycle is to be based.

Furthermore, said safety device can be further integrated by a device for controlling the delivered power, at least close to reaching the unloading position. This allows to detect promptly any peaks in delivered power, which correspond to the resistance offered by horticultural products A previously positioned incorrectly in the collection container.

In practice it has been found that the apparatus 1 achieves the intended aim: the apples propelled by the fluid current are forced to align themselves (preferably one by one) in the channels 5 formed by the partitions 4, with the matrix 2 floating at a first vertical height, in an entirely practical and easy manner.

Before transferring downstream the aligned apples (for example by means of the head 8), the matrix 2 is partially lifted, by changing its density (or also in another manner), up to a second vertical height, thus solving any incorrect placements of one or more horticultural products A.

Subsequently, after the apples have been picked from by the channels 5, optionally by means of the head 8, the matrix 2 is returned to the first vertical height, preparing it for a new cycle.

Likewise, in a manner of use that is of considerable practical interest, the head 8 ensures practical transfer of the horticultural products A after their sorting by means of the matrix 2.

The invention thus conceived is susceptible of numerous modifications and variations, the scope of protection of the invention being only defined by the appended claims; all the details may further be replaced with other technically equivalent elements.

For example, both the matrix 2 and the head 8 (and their main components described above) are flexible and can be adapted easily to the various grades of the apples. The partitions 4 and the walls 12 can thus be assembled in a modular manner according to (common) center distances which can vary at will.

As mentioned, Figure 1 proposes a solution in which a single head 8 interacts with three different tanks B (and three containers), which accommodate respective matrices 2, which are designed to work with distinct subgroups of apples, for example because they have the same grade but a different color.

Nevertheless, the number of matrices 2, heads 8, tanks B and containers can be chosen at will without abandoning the protective scope claimed herein.

All the parts of the machine that are in contact with the fruits are covered with adequate material so as to ensure dedicate contact with the apples.

Safety measures are further provided in order to ensure operation in accordance with applicable statutory provisions and avoid damage to the horticultural products A or to the apparatus 1 itself even in non-nominal operating conditions. In particular, stroke limit sensors and safety devices are provided in order to obviate pneumatic failures: if the failure occurs when the membranes are inflated, the respective valves remain closed in order to avoid the release and therefore the loss of apples. In case of malfunction, the robot 11 reaches a safe position that allows the operator to intervene without risks. The stopping and resetting of the apparatus 1 can thus occur without damage.

In the exemplary embodiments shown, individual characteristics, given in relation to specific examples, may actually be interchanged with other different characteristics that exist in other exemplary embodiments.

In practice, the materials used, as well as the dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A line for processing horticultural products, comprising a tank (B) along which the horticultural products (A) are pushed by a fluid current, on which said horticultural products (A) can float freely, and an apparatus (1) for processing the horticultural products (A), comprising at least one alignment matrix (2), provided with a base platform (3), which can be submerged at a predefined section of said tank (B), and with a plurality of mutually parallel partitions (4), which are extended at right angles from the upper face of said platform (3) and, when said platform (3) is submerged in the predefined section, at least rise above the free surface of the predefined section, each pair of said adjacent partitions (4), which can be arranged along the movement direction of the fluid current, defining a respective channel (5) for automatic forced alignment for the horticultural products (A), pushed toward the predefined section by the fluid current,
**characterized in that** the at least one alignment matrix is a floating alignment matrix.

2. The processing line according to claim 1, **characterized in that** each pair of said adjacent partitions (4) has the same center distance, chosen so as to correspond substantially to the transverse space occupation of the horticultural products (A) that float on the free surface of the fluid current, for their alignment one by one along each one of said channels (5).

3. The processing line according to claim 1 or 2, **characterized in that** the center distance between each pair of said adjacent partitions (4) can be adjusted at will, for adaptation to any variation of the transverse space occupation of the horticultural products (A) that float on the free surface of the fluid current.

4. The processing line according to one or more of the preceding claims, **characterized in that** said apparatus (1) comprises means for adjusting the density of said matrix (2) for its floating at a first vertical height, during the alignment of the horticultural products (A), and the subsequent transition to a second vertical height, which is greater than the first vertical height, for the partial lifting of said partitions (4) and the settling of the horticultural products (A) within said channels (5), and vice versa.

5. The processing line according to claim 4, **characterized in that** said adjustment means comprise a pneumatic circuit, which is affected by a dispenser of compressed air and leads to said matrix (2), for sending on command compressed air within said matrix (2), which is at least partially hollow, with a consequent increase in the internal pressure and density, said circuit being provided with at least one discharge valve, for expelling on command the compressed air with a consequent decrease in the internal pressure and density.

6. The processing line according to one or more of the preceding claims, **characterized in that** said apparatus (1) comprises elements (6) for guiding the movement of said matrix (2), within the respective said tank (B), between the first vertical height and the second vertical height.

7. The processing line according to claim 6, **characterized in that** each one of said guiding elements (6) is constituted substantially by a lateral bar, which is arranged at a respective side of said platform (3) and is provided with at least one corresponding slider (7) that can be coupled slidingly with a respective track (C) provided along the internal lateral surfaces of said tank (B).

8. The processing line according to one or more of the preceding claims, **characterized in that** said apparatus (1) comprises an assembly for moving a head (8) between at least one collection position, in which it substantially faces and is proximate to said matrix (2), and an unloading position, in which said head (8) faces and is proximate to a container for collecting the horticultural products (A), said head (8) comprising means for picking up and retaining the horticultural products (A), which can be activated at said collection position and can be deactivated at said unloading position.

9. The processing line according to claim 8, **characterized in that** said pickup and retention means comprise a plurality of walls (12) that are normally arranged vertically, are formed by said head (8) and are spaced substantially according to said center distance, which is preferably adjustable, between said pairs of adjacent partitions (4), and respective retractable transverse elements (13), which can move between at least one active configuration, which can be activated upon reaching said at least one collection position, in which said matrix (2) is pushed downward by said head (8) and said walls (12) are interposed between the aligned horticultural products (A), replacing said partitions (4), and at least one passive configuration, which can be activated upon reaching said at least one unloading position, in which said walls (12) face and are proximate to the bottom level of the collection container, in said active configuration said transverse elements (13) protruding transversely from the space occupation of said walls (12) for mechanical interference with the fall of the horticultural products (A) as a consequence of the subsequent lifting of said head (8) and its transfer toward said unloading position, in said passive configuration said transverse elements (13) being retracted toward said walls (12), for the free release of the horticultural products (A) in the respective collection container.

10. The processing line according to claim 9, **characterized in that** each one of said transverse elements (13) is shaped by at least one active portion of at least one membrane, which can be inflated on command for its transition from said passive configuration to said active configuration.

11. The processing line according to claim 10, **characterized in that** each one of said membranes is coupled in a lower region to a respective said wall (12), which has a substantially laminar shape, and can be inflated on command for transition from said passive configuration, in which it has a substantially laminar shape and is substantially aligned vertically with the respective said wall (12), to said active configuration, in which it has an increased volume and a preferably cylindrical shape, respective mutually opposite active portions of each pair of adjacent membranes cooperating for mechanical interference with the fall of the horticultural products (A).

## Patentansprüche

1. Linie zur Verarbeitung von Gartenbauprodukten, aufweisend ein Becken (B), entlang dessen die Gartenbauprodukte (A) von einem Fluidstrom, auf dem die Gartenbauprodukte (A) frei schwimmen können, geschoben werden, und eine Vorrichtung (1) zur Verarbeitung der Gartenbauprodukte (A), aufweisend mindestens eine Ausrichtungsmatrix (2), die mit einer Basisplattform (3), die an einem vordefinierten Abschnitt des Beckens (B) eingetaucht werden kann, und mit mehreren zueinander parallelen Trennelementen (4) bereitgestellt ist, die sich im rechten Winkel von der Oberseite der Plattform (3) erstrecken und, wenn die Plattform (3) in den vordefinierten Abschnitt eingetaucht ist, mindestens über die freie Oberfläche des vordefinierten Abschnitts steigen, wobei jedes Paar benachbarter Trennelemente (4), die entlang der Bewegungsrichtung des Fluidstroms angeordnet werden können, einen jeweiligen Kanal (5) zum automatischen Zwangsausrichten für die Gartenbauprodukte (A), die von dem Fluidstrom in Richtung des vordefinierten Abschnitts geschoben werden, definiert, **dadurch gekennzeichnet, dass** die mindestens eine Ausrichtungsmatrix eine schwimmende Ausrichtungsmatrix ist.

2. Verarbeitungslinie nach Anspruch 1, **dadurch gekennzeichnet, dass** jedes Paar benachbarter Trennelemente (4) den gleichen Mittenabstand hat, der so gewählt ist, dass er im Wesentlichen dem in Querrichtung belegten Raum der Gartenbauprodukte (A) entspricht, die für ihre einzelne Ausrichtung entlang jedes der Kanäle (5) auf der freien Oberfläche des Fluidstroms schwimmen.

3. Verarbeitungslinie nach Anspruch 1 oder 2, **dadurch gekennzeichnet, dass** der Mittenabstand zwischen jedem Paar benachbarter Trennelemente (4) zur Anpassung an eine Veränderung des in Querrichtung belegten Raums der Gartenbauprodukte (A), die auf der freien Oberfläche des Fluidstroms schwimmen, nach Belieben eingestellt werden kann.

4. Verarbeitungslinie nach einem oder mehreren der vorhergehenden Ansprüche, **dadurch gekennzeichnet, dass** die Vorrichtung (1) Mittel zum Einstellen der Dichte der Matrix (2), damit diese während der Ausrichtung der Gartenbauprodukte (A) auf einer ersten vertikalen Höhe schwimmt, des anschließenden Übergangs auf eine zweite vertikale Höhe, die größer als die erste vertikale Höhe ist, um die Trennelemente (4) teilweise anzuheben, und des Ablegens der Gartenbauprodukte (A) in den Kanälen (5) und umgekehrt aufweist.

5. Verarbeitungslinie nach Anspruch 4, **dadurch gekennzeichnet, dass** die Einstellmittel einen pneumatischen Kreislauf aufweisen, der von einem Druckluftspender beeinflusst wird und zu der Matrix (2) führt, um befehlsgesteuert Druckluft in die Matrix (2) zu leiten, die zumindest teilweise hohl ist, mit einer daraus folgenden Erhöhung des Innendrucks und der Dichte, wobei der Kreislauf mit mindestens einem Auslassventil bereitgestellt ist, um befehlsgesteuert die Druckluft mit einer daraus folgenden Abnahme des Innendrucks und der Dichte auszustoßen.

6. Verarbeitungslinie nach einem oder mehreren der vorhergehenden Ansprüche, **dadurch gekennzeichnet, dass** die Vorrichtung (1) Elemente (6) zum Führen der Bewegung der Matrix (2) innerhalb des jeweiligen Beckens (B) zwischen der ersten vertikalen Höhe und der zweiten vertikalen Höhe aufweist.

7. Verarbeitungslinie nach Anspruch 6, **dadurch gekennzeichnet, dass** jedes der Führungselemente (6) im Wesentlichen durch eine seitliche Leiste gebildet ist, die an einer jeweiligen Seite der Plattform (3) angeordnet und mit mindestens einem entsprechenden Gleitstück (7) bereitgestellt ist, das gleitend mit einer jeweiligen Schiene (C) gekoppelt werden kann, die entlang der inneren Seitenflächen des Beckens (B) bereitgestellt ist.

8. Verarbeitungslinie nach einem oder mehreren der vorhergehenden Ansprüche, **dadurch gekennzeichnet, dass** die Vorrichtung (1) eine Anordnung zum Bewegen eines Kopfs (8) zwischen mindestens einer Sammelposition, in der er im Wesentlichen der Matrix (2) zugewandt ist und sich in deren Nähe befindet, und einer Entladeposition, in welcher der Kopf (8) einem Behälter zum Sammeln der Gartenprodukte (A) zugewandt ist und sich in dessen Nähe befindet, aufweist, wobei der Kopf (8) Mittel zum Aufnehmen und Festhalten der Gartenprodukte (A) aufweist, die in der Sammelposition aktiviert und in der Entladeposition deaktiviert werden können.

9. Verarbeitungslinie nach Anspruch 8, **dadurch gekennzeichnet, dass** die Aufnahme- und Festhaltemittel mehrere Wände (12), die normalerweise vertikal angeordnet sind, durch den Kopf (8) gebildet werden und im Wesentlichen gemäß dem Mittenabstand, der vorzugsweise einstellbar ist, zwischen den Paaren benachbarter Trennelemente (4) beabstandet sind, und jeweilige einziehbare Querelemente (13) aufweisen, die sich zwischen mindestens einer aktiven Konfiguration, die bei Erreichen der mindestens einen Sammelposition aktiviert werden kann, in welcher die Matrix (2) durch den Kopf (8) nach unten gedrückt wird und die Wände (12) zwischen den ausgerichteten Gartenbauprodukten (A) angeordnet sind und dabei die Trennelemente (4) ersetzen, und mindestens einer passiven Konfiguration, die bei Erreichen der mindestens einen Entladeposition aktiviert werden kann, in welcher die Wände (12) dem Bodenniveau des Sammelbehälters zugewandt und in der Nähe davon sind, bewegen können, wobei in der aktiven Konfiguration die Querelemente (13) quer aus dem von den Wänden (12) belegten Raum herausragen, um den Fall der Gartenbauprodukte (A) als Folge des anschließenden Anhebens des Kopfs (8) und seiner Überführung in Richtung der Entladeposition mechanisch zu stören, wobei in der passiven Konfiguration die Querelemente (13) in Richtung der Wände (12) eingezogen werden, um die Gartenbauprodukte (A) frei in den jeweiligen Sammelbehälter abzugeben.

10. Verarbeitungslinie nach Anspruch 9, **dadurch gekennzeichnet, dass** jedes der Querelemente (13) durch mindestens einen aktiven Abschnitt mindestens einer Membran geformt ist, die befehlsgesteuert für ihren Übergang von der passiven Konfiguration zu der aktiven Konfiguration aufgeblasen werden kann.

11. Verarbeitungslinie nach Anspruch 10, **dadurch gekennzeichnet, dass** jede der Membranen in einem unteren Bereich mit einer jeweiligen Wand (12) gekoppelt ist, die eine im Wesentlichen lamellenartige Form hat und befehlsgesteuert zum Übergang von der passiven Konfiguration, in der sie eine im Wesentlichen lamellenartige Form hat und mit der jeweiligen Wand (12) im Wesentlichen vertikal ausgerichtet ist, zu der aktiven Konfiguration, in der sie ein vergrößertes Volumen und eine vorzugsweise zylindrische Form hat, aufblasbar ist, wobei jeweilige einander gegenüberliegende aktive Abschnitte jedes Paars benachbarter Membranen zusammenwirken, um den Fall der Gartenbauprodukte (A) mechanisch zu stören.

## Revendications

1. Ligne de traitement de produits horticoles, comprenant un réservoir (B) le long duquel les produits horticoles (A) sont poussés par un courant de fluide, sur lequel lesdits produits horticoles (A) peuvent flotter librement, et un dispositif (1) pour traiter les produits horticoles (A), comprenant au moins une matrice d'alignement (2), pourvue d'une plate-forme de base (3), qui peut être submergée en une section prédéfinie dudit réservoir (B), et avec une pluralité de séparations (4) mutuellement parallèles, qui sont étendues à angle droit depuis la face supérieure de ladite plate-forme (3) et, quand ladite plate-forme (3) est submergée dans la section prédéfinie, s'élèvent au moins au-dessus de la surface libre de la section prédéfinie, chaque paire desdites séparations (4) adjacentes, qui peuvent être agencées le long de la direction de déplacement du courant fluide, définissant un canal (5) respectif pour un alignement forcé automatique pour les produits horticoles (A), poussés vers la section prédéfinie par le courant de fluide, **caractérisée en ce que** l'au moins une matrice d'alignement est une matrice d'alignement flottante.

2. Ligne de traitement selon la revendication 1, **caractérisée en ce que** chaque paire desdites séparations (4) adjacentes a la même distance au centre, choisie de façon à correspondre sensiblement à l'occupation en espace transversal des produits horticoles (A) qui flottent sur la surface libre du courant de fluide, pour leur alignement un par un le long de chacun desdits canaux (5).

3. Ligne de traitement selon la revendication 1 ou 2, **caractérisée en ce que** la distance au centre entre chaque paire desdites séparations (4) adjacentes peut être réglée au besoin, pour s'adapter à toute variation de l'occupation en espace transversal des produits horticoles (A) qui flottent sur la surface libre du courant de fluide.

4. Ligne de traitement selon une ou plusieurs des revendications précédentes, **caractérisée en ce que** ledit dispositif (1) comprend des moyens pour régler la densité de ladite matrice (2) pour sa flottaison à une première hauteur verticale, pendant l'alignement des produits horticoles (A), et la transition suivante à une seconde hauteur verticale, qui est supérieure à la première hauteur verticale, pour le soulèvement partiel desdites séparations (4) et l'installation des produits horticoles (A) dans lesdits canaux (5), et vice versa.

5. Ligne de traitement selon la revendication 4, **caractérisée en ce que** lesdits moyens de réglage comprennent un circuit pneumatique, qui est équipé d'un distributeur d'air comprimé et mène à ladite matrice (2), pour envoyer de l'air comprimé de commande dans ladite matrice (2), qui est au moins en partie creuse, avec une augmentation qui s'ensuit de la densité et de la pression interne, ledit circuit étant pourvu d'au moins une soupape d'évacuation, pour expulser sur commande l'air comprimé avec une diminution qui s'ensuit de la densité et de la pression interne.

6. Ligne de traitement selon une ou plusieurs des revendications précédentes, **caractérisée en ce que** ledit dispositif (1) comprend des éléments (6) pour guider le déplacement de ladite matrice (2), dans ledit réservoir (B) respectif, entre la première hauteur verticale et la seconde hauteur verticale.

7. Ligne de traitement selon la revendication 6, **caractérisée en ce que** chacun desdits éléments de guidage (6) est constitué sensiblement par une barre latérale, qui est agencée d'un côté respectif de ladite plate-forme (3) et est pourvue d'au moins un élément coulissant (7) correspondant qui peut être couplé de manière coulissante avec un rail (C) respectif placé le long des surfaces latérales intérieures dudit réservoir (B).

8. Ligne de traitement selon une ou plusieurs des revendications précédentes, **caractérisée en ce que** ledit dispositif (1) comprend un ensemble pour déplacer une tête (8) entre au moins une position de collecte, dans laquelle elle fait sensiblement face à et est proche de ladite matrice (2), et une position de déchargement, dans laquelle ladite tête (8) fait face à et est proche d'un récipient pour collecter les produits horticoles (A), ladite tête (8) comprenant des moyens pour saisir et retenir les produits horticoles (A), qui peuvent être activés dans ladite position de collecte et peuvent être désactivé dans ladite position de déchargement.

9. Ligne de traitement selon la revendication 8, **caractérisée en ce que** lesdits moyens de saisie et de retenue comprennent une pluralité de parois (12) qui sont agencées normalement verticalement, sont formées par ladite tête (8) et sont espacées sensiblement selon ladite distance au centre, qui est de préférence réglable, entre lesdites paires de séparations (4) adjacentes, et des éléments transversaux rétractables (13) respectifs, qui peuvent se déplacer entre au moins une configuration active, qui peut être activée lors de l'atteinte de ladite au moins une position de collecte, dans laquelle ladite matrice (2) est poussée vers le bas par ladite tête (8) et lesdites parois (12) sont intercalées entre les produits horticoles (A), remplaçant lesdites séparations (4), et au moins une configuration passive, qui peut être activée lors de l'atteinte de ladite au moins une position de déchargement, dans laquelle lesdites parois (12) font face à et sont proche du niveau du fond du récipient de collecte, dans ladite configuration active lesdits éléments transversaux (13) faisant saillie transversalement depuis l'occupation spatiale desdites parois (12) pour une interférence mécanique avec la chute des produits horticoles (A) en conséquence du soulèvement qui suit de ladite tête (8) et de son transfert vers ladite position de déchargement, dans ladite configuration passive lesdits éléments transversaux (13) étant rétractés vers lesdites parois (12), pour la libération des produits horticoles (A) dans le récipient de collecte respectif.

10. Ligne de traitement selon la revendication 9, **caractérisée en ce que** chacun des éléments transversaux (13) est formé d'au moins une partie active d'au moins une membrane, qui peut être gonflée sur commande pour sa transition de ladite configuration passive à ladite configuration active.

11. Ligne de traitement selon la revendication 10, **caractérisée en ce que** chacune desdites membranes est couplée dans une région inférieure à une dite paroi (12) respective, qui a une forme sensiblement laminaire, et peut être gonflée sur commande pour transition de ladite configuration passive, dans laquelle elle a une forme sensiblement laminaire et est sensiblement alignée verticalement avec ladite paroi (12) respective, vers ladite configuration active, dans laquelle elle a un volume augmenté et une forme préférablement cylindrique, des parties actives mutuellement opposées respectives de chaque paire de membranes adjacentes coopérant pour interférence mécanique avec la chute des produits horticoles (A).
